Europäisches Patentamt

(19) European Patent Office

Office européen des brevets

(11) Numéro de publication: **0 012 057**
**B1**

(12) **FASCICULE DE BREVET EUROPEEN**

(45) Date de publication du fascicule de brevet:
**09.12.81**

(21) Numéro de dépôt: **79400875.5**

(22) Date de dépôt: **14.11.79**

(51) Int. Cl.³: **F 16 L 41/08,** F 16 L 57/00,
**F 15 D 1/04 // G21C13/02**

(54) **Raccordement de deux conduits.**

(30) Priorité: **22.11.78 FR 7832925**

(43) Date de publication de la demande:
**11.06.80 Bulletin 80/12**

(45) Mention de la délivrance du brevet:
**09.12.81 Bulletin 81/49**

(84) Etats contractants désignés:
**BE CH DE GB IT SE**

(56) Documents cités:
**FR-A- 625 733**
**FR-A-2 229 010**
**FR-A-2 262 264**
**FR-A-2 379 014**
**US-A-2 266 609**

(73) Titulaire: **Framatome, Tour Fiat 1 place de la Coupole,**
**F-92400 Courbevoie (FR)**

(72) Inventeur: **Parras, Faustino, 3 rue Anatole France,**
**F-92370 Chaville (FR)**

(74) Mandataire: **Saint-Martin, René et al,**
**CREUSOT-LOIRE 15 rue Pasquier, F-75383 Paris**
**Cedex 08 (FR)**

ACTORUM AG.

«Raccordement de deux conduits»

La présente invention se rapporte à un raccordement, au travers d'une manchette, dite thermique, d'un conduit affluent et d'un conduit collecteur qui font un angle entre eux et canalisent respectivement un fluide d'injection et un fluide principal. Les fluides sont particulièrement des liquides. Par exemple le conduit affluent canalise de l'eau relativement froide, le conduit collecteur canalisant de l'eau relativement chaude.

Le raccordement selon l'invention peut notamment être employé en tuyauterie de réacteur nucléaire.

Le FR-A 2 229 010 décrit un raccordement de deux conduits incorporant une manchette tubulaire canalisant le liquide d'injection avant son entrée dans le conduit collecteur. Cette manchette est logée à l'intérieur d'une pièce de raccordement prolongeant le conduit affluent. La chambre annulaire ménagée entre la pièce de raccordement et la manchette est ouverte entre l'extrémité de la manchette et l'ouverture latérale faisant communiquer les deux conduits. Cette manchette évite que le liquide injecté dans le conduit collecteur atteigne les zones du branchement qui sont soumises à des contraintes élevées. On s'est aperçu que le liquide, relativement chaud, circulant dans le conduit collecteur a tendance à circuler ou remonter dans la chambre annulaire entourant la manchette thermique. Par ailleurs la veine du liquide d'injection ne se décolle pas suffisamment de la paroi du conduit collecteur qui n'est pas bien protégé. Le bord plan de la manchette accentue les tourbillons et la remontée du liquide d'injection. Du fait que la veine de liquide d'injection ne se décolle pas suffisamment de la paroi du conduit collecteur, la zone d'intersection des deux conduits est mal protégée de même que les soudures du piquage sur le conduit collecteur. Ces défauts sont accentués lorsque le rapport de la vitesse du liquide d'injection à la vitesse du liquide principal se rapproche de 1.

On a, dans le FR-A 2 229 010 précité, réduit l'orifice par lequel la chambre annulaire débouche dans le conduit collecteur. A cet effet, la chambre est refermée par un renflement annulaire situé au niveau de l'orifice de communication des deux conduits. Un autre type de raccordement combine le renflement annulaire de la manchette à une lèvre rentrante, ménagée dans l'ouverture latérale coaxialement au conduit affluent. Pour éviter le battement de la manchette on a prévu des plats soudés à l'intérieur de la pièce de raccordement, dans la chambre annulaire et à proximité de l'orifice de cette chambre.

L'extrémité de la manchette peut être en saillie ou en retrait par rapport à la génératrice intérieure du conduit collecteur. L'embout de la manchette peut également présenter conformément à la demande de brevet publiée précitée un évasement divergent dans le sens d'écoulement du liquide affluent.

Le brevet français 2 379 014 décrit un raccordement en T comportant une buse tubulaire conique montée sur le conduit affluent. Cette buse déborde à l'intérieur du conduit collecteur et perturbe l'écoulement dans ce conduit.

L'invention fournit un raccordement, à manchette, de deux conduits ne présentant pas les inconvénients précités. La manchette selon l'invention retarde l'épanouissement de la veine injectée et du mélange, ce qui protège la partie du conduit collecteur située en aval du piquage. Elle évite les remontées dans la chambre annulaire qui l'entoure. Un autre but de l'invention est d'obtenir un bon comportement vibratoire de la manchette.

Le raccordement selon l'invention réunit un conduit collecteur et un conduit affluent qui débouche par une ouverture latérale dans ledit conduit collecteur et comprend une manchette tubulaire montée selon l'axe du conduit affluent et dont la bouche d'entrée est réunie avec étanchéité audit conduit affluent, l'extrémité aval étant engagée dans ladite ouverture latérale en formant un orifice, et il est caractérisé par le fait que ladite manchette a une forme qui converge, selon l'axe du conduit affluent, dans le sens dirigé de l'extérieur vers l'axe du conduit collecteur et est entièrement implantée dans ledit conduit affluent le bord de l'extrémité aval étant doté d'un profil correspondant à l'intersection de la manchette avec un cylindre fictif, coaxial à l'axe du conduit collecteur et dont le diamètre est approximativement égal au diamètre intérieur dudit conduit collecteur.

L'invention va maintenant être décrite avec plus de détails en se référant à des modes de réalisation donnés à titre d'exemples et représentés par les dessins annexés.

La figure 1 montre, en coupe, un raccordement de deux conduits équipé d'une manchette conforme à l'invention.

La figure 2 représente une coupe selon II-II de la figure 1.

La figure 3 montre une variante de la figure 1.

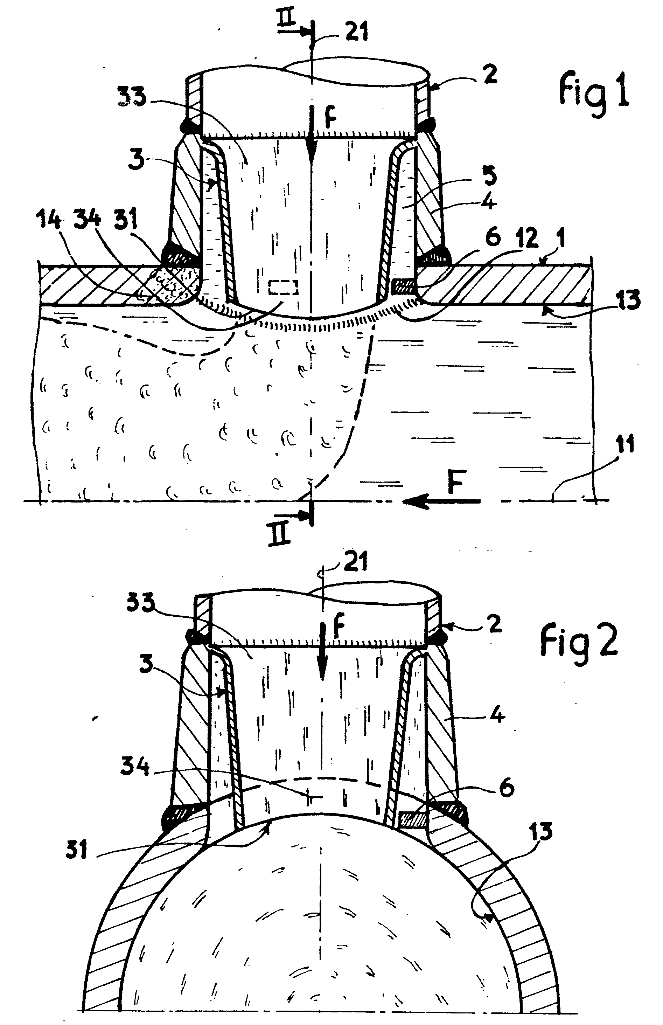

Le raccordement représenté sur les figures 1 à 3 connecte un conduit ou tuyau 1 à un conduit ou tuyau 2. Le conduit 1, dit collecteur, canalise une veine de liquide principal qui s'écoule dans le sens de la flèche F. Le conduit 2, dit affluent canalise une veine de liquide d'injection qui s'écoule dans le sens de la flèche f vers le conduit collecteur. L'axe 21 du conduit affluent et l'axe 11 du conduit collecteur 1 sont concourants et font un angle entre eux. Généralement le conduit collecteur 1 est à angle droit du conduit affluent 2. Les deux conduits communiquent par une ouverture latérale 12 qui découpe la paroi cylindrique du conduit 1. Le conduit collecteur 1 canalise un liquide relativement chaud ou froid par rapport au liquide s'écoulant dans le conduit affluent 2.

Le conduit affluent 2 est branché en dérivation sur le conduit collecteur 1 par l'intermédiaire d'une virole 4 fixée au conduit 1.

Le raccordement comporte une manchette 3 ayant une forme tubulaire de révolution. Son axe de symétrie est coaxial à l'axe du conduit affluent 2. La bouche d'entrée 33 de cette manchette est réunie avec étanchéité au conduit affluent. L'extrémité ou sortie aval 34 par où sort le liquide affluent est engagée avec jeu dans l'ouverture latérale de communication 12.

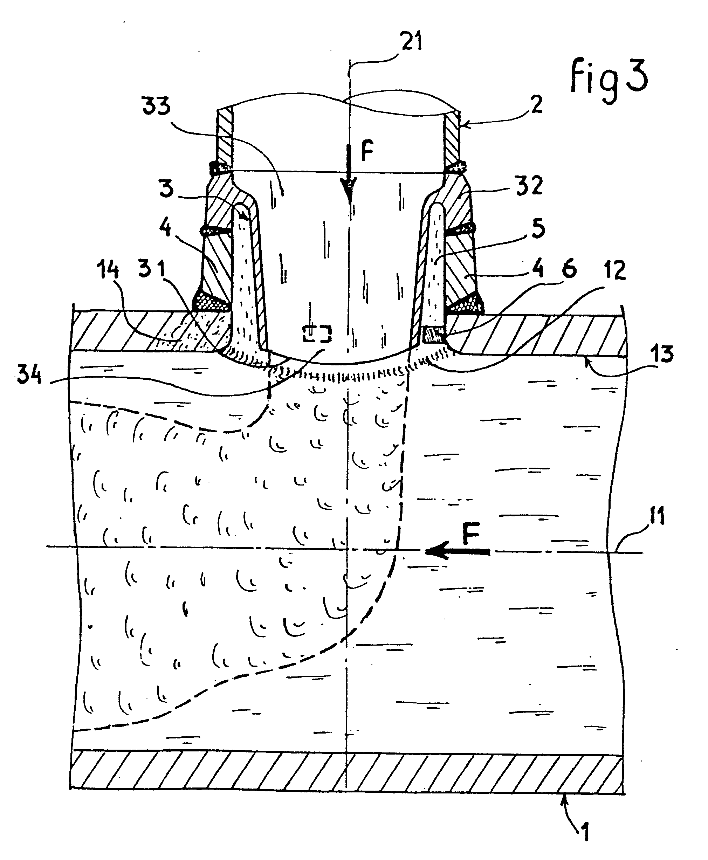

La manchette est ceinturée extérieurement par la virole 4 de manière à former une chambre annulaire 5. Cette chambre est fermée du côté amont par le rebord extérieur de la manchette. Elle est ouverte, du côté aval et du côté de l'axe 11, par l'orifice annulaire compris entre l'ouverture 12 et le bord 31 de l'extrémité aval de la manchette. Dans le mode de réalisation de la figure 1, le rebord de la manchette est fixé en continu à la virole 4. Dans la variante de la figure 3, le rebord forme un ensemble monobloc avec la virole extérieure 32 qui est fixée, en amont, au conduit 2 et, en aval, à la virole 4. L'étanchéité est réalisée entre le conduit affluent et l'entrée de la manchette. Des plots 6 sont disposés dans l'orifice annulaire compris entre l'ouverture 12 et la manchette. Ils sont fixés sur la surface intérieure de l'ouverture 12.

La manchette a une forme qui converge selon l'axe 21 du conduit affluent, dans le sens dirigé de l'extérieur vers l'axe 11 du conduit collecteur, c'est-à-dire dans le sens f de l'écoulement du liquide injecté. La section de passage de la veine du liquide dans la manchette diminue de l'entrée 33 jusqu'à la sortie 34. La section droite de la sortie 34 de la manchette est la section minimum de passage du liquide injecté. La forme générale de la manchette est de préférence tronconique.

Le bord 31 ceinturant la sortie 34 de la manchette a un profil qui enveloppe un cylindre fictif dont l'axe est l'axe 11 du conduit collecteur. Le diamètre de ce cylindre fictif est approximativement égal au diamètre du cylindre intérieur 13 du conduit collecteur c'est à dire au diamètre de la veine liquide dans ce conduit.

L'épaisseur de la manchette est telle que la fréquence propre de celle-ci est très éloignée des fréquences d'excitation d'origine hydraulique. Dans ces conditions, aucun phénomène de couplage dynamique n'est à craindre. Les plots 6, montés à jeu minimum avec la manchette, maintiendraient celle-ci en cas de rupture.

Le fonctionnement du raccordement selon l'invention va maintenant être expliqué.

Le liquide injecté venant du conduit affluent 2 est dirigé par la manchette conique 3 dans une direction inclinée, généralement perpendiculaire, au conduit collecteur 1. Le liquide injecté est plus froid ou plus chaud que le liquide principal. La veine du liquide injecté ou du mélange est alors telle que représentée sur les figures 1 et 3. La manchette 3 retarde l'épanouissement de la veine injectée et du mélange pour protéger la zone 14 du conduit collecteur et elle évite les remontées dans la chambre 5.

Le décollement de la veine du liquide injecté par rapport à la génératrice supérieure du conduit collecteur 1 améliore aussi la protection de celui-ci surtout dans le cas où le rapport de la vitesse du liquide injecté à la vitesse du liquide principal diminue.

Le profil du bord 31 de l'extrémité aval de la manchette contribue à éviter la remontée du liquide injecté ou du mélange dans la chambre 5. Le liquide injecté est obligé de se mélanger juste à la sortie de la manchette car il ne rencontre aucune zone statique du liquide principal. Le mélange instantané améliore aussi la protection de la zone 14. Un aspect non négligeable de la forme du bord 31 est d'améliorer le comportement vibratoire car il ne s'oppose en aucun point à l'écoulement du liquide principal.

Il est bien entendu que l'on peut, sans sortir du cadre de l'invention, imaginer des variantes et perfectionnements de détails et de même envisager l'emploi de moyens équivalents.

**Revendications**

1. Raccordement d'un conduit collecteur (1) et d'un conduit affluent (2) qui débouche par une ouverture latérale (12) dans ledit conduit collecteur (1), comprenant une manchette tubulaire (3) montée selon l'axe (21) du conduit affluent (2) et dont la bouche d'entrée (33) est réunie avec étanchéité audit conduit affluent (2), l'extrémité aval (34) étant engagée dans ladite ouverture latérale (12) en formant un orifice, caractérisé par le fait que ladite manchette (3) a une forme qui converge selon l'axe (21) du conduit affluent dans le sens dirigé de l'extérieur vers l'axe (11) du conduit collecteur (1) et qu'elle est entièrement implantée dans ledit conduit affluent (2), le bord (31) de l'extrémité aval étant doté d'un profil correspondant à l'intersection de la manchette (3) avec un cylindre fictif, coaxial à l'axe du conduit collecteur et dont le diamètre est approximativement égal au diamètre intérieur (13) dudit conduit collecteur.

2. Raccordement selon la revendication 1, caractérisé par le fait qu'il comporte des plots (6) disposés dans l'orifice annulaire compris entre l'ouverture latérale (12) et l'extrémité aval (34).

3. Raccordement selon l'une quelconque des revendications précédentes, caractérisé par le fait que le conduit affluent (2) est branché en dérivation sur le conduit collecteur (1) par l'intermédiaire d'une virole (4, 32) à laquelle est fixée la manchette (3).

**Patentansprüche**

1. Verbindung zwischen einer Sammelleitung (1) und einer Zuflussleitung (2), die durch eine seitliche Öffnung (12) in die genannte Sammelleitung (1) mündet, bestehend aus einem Rohrstutzen (3), der nach der Achse (21) der Zuflussleitung (2) montiert ist und dessen Eintrittsöffnung (33) dicht mit der Zuflussleitung (2) verbunden ist, wobei das nachgeordnete Ende in die genannte seitliche Öffnung (12) eingeführt ist und eine Öffnung bildet, dadurch gekennzeichnet, dass der genannte Stutzen (3) so geformt ist, dass er nach der Achse (21) der Zuflussleitung in der Richtung von aussen zur Achse (11) der Sammelleitung (1) verengend zugeht und er vollständig in der Zuflussleitung (2) eingefügt ist, wobei der Rand (31) des nachgeordneten Endes ein Profil aufweist, das dem Schnittpunkt zwischen dem Stutzen (3) und einem fiktiven Zylinder entspricht, der zur Achse der Sammelleitung koaxial ist und dessen Durchmesser ungefähr dem Innendurchmesser (13) der genannten Sammelleitung entspricht.

2. Verbindung nach Anspruch 1 dadurch gekennzeichnet, dass sie Klötze (6) aufweist, die in der ringförmigen Öffnung zwischen der seitlichen Öffnung (12) und dem nachgeordneten Ende (34) angeordnet sind.

3. Verbindung nach einem der vorgenannten Ansprüche dadurch gekennzeichnet, dass die Zuflussleitung (2) als Abzweigleitung über einen Rohrring (4, 32), auf dem der Stutzen (3) befestigt ist, an die Sammelleitung (1) angeschlossen ist.

**Claims**

1. Coupling for a collecting pipe (1) and an inlet (2) which issues through a lateral opening (12) into the said collecting pipe (1), comprising a tabular sleeve (3) mounted along the axis (21) of the inlet pipe (2) and the inlet aperture (33) of which is connected in a sealed manner with the said inlet pipe (2), the downstream end (34) being engaged in the said lateral opening (12) by forming an aperture, characterised by the fact that the said sleeve (3) has a shape which converges along the axis (21) of the inlet pipe in the direction from the outside towards the axis (11) of the collecting pipe (1) and which is completely implanted in the said collection pipe (2), the edge (31) of the downstream end having a shape corresponding to the intersection of the sleeve (3) with an imaginery cylinder, coaxial to the axis of the collecting pipe and the diameter of which is approximately equal to the interior diameter (13) of the said collecting pipe.

2. Coupling according to Claim 1, characterised by the fact that it comprises plugs (6) arranged in the annular aperture enclosed between the lateral opening (12) and the downstream end (34).

3. Coupling according to any of the previous Claims, characterised by the fact that the inlet pipe (2) is joined so as to form a branch on the collecting pipe (1) by means of a collar (4, 32) to which is fixed the sleeve (3).

fig 1

fig 2

fig 3